# EUROPEAN PATENT SPECIFICATION

(11) **EP 3 584 457 B1**
(45) Date of publication and mention of the grant of the patent: **08.06.2022**
(21) Application number: 19178307.5
(22) Date of filing: 05.06.2019
(51) Int. Cl.: F16B 43/02, F16M 7/00, F16B 5/02

(54) **SUPPORTING FOOT ASSEMBLY**
STÜTZFUSSANORDNUNG
ENSEMBLE DE PIED DE SUPPORT

(30) Priority: 20.06.2018 TW 107121174
(43) Date of publication of application: 25.12.2019
(73) Proprietor: Index Automatic Technology Co., Ltd., Taichung City (TW)
(72) Inventor: LIN, Yen-Cheng, TAICHUNG CITY (TW)
(74) Representative: Straus, Alexander

(56) References cited:
- DE-A1-102014 101 592
- DE-U1- 20 110 111
- DE-U1-202015 101 762
- FR-A1- 2 638 793
- JP-B1- 5 081 325
- US-A- 3 081 114
- US-A1- 2005 261 783
- US-B1- 6 616 390

## Description

### BACKGROUND OF THE INVENTION

### 1. Technical Field

The present invention relates to supporting structures, and more particularly to a supporting foot assembly for supporting equipment and machinery.

### 2. Description of Related Art

The existing supporting feet provide the objects they support with only a limited contact area and thus are likely to deform when bearing substantive weights. An effective solution to this problem is to have a support foot strengthened by giving it an increased thickness. However, this known approach unavoidably leads to increased material use and weight of supporting feet and leaves the conventional supporting feet defects to be addressed. The document US 2005/0261783 shows a supporting foot in accordance with the prior art.

### BRIEF SUMMARY OF THE INVENTION

To address of the foregoing shortcomings of the prior art, the objective of the present invention is to provide a supporting foot assembly that is more stable, firmer, more versatile and more supportive than the prior-art devices.

For accomplishing the foregoing objective, the present invention provides a supporting foot assembly, comprising a base having a spherical convex, a disk connected to the spherical convex from below, a through hole, and an internal space; a swingably fitting member having a spherical concave swingably and fittingly contacting the spherical convex of the base, a lower edge located at a lower periphery of the spherical concave, an aperture, and an upper outer edge; a prop component having a bolt passing through the through hole of the base and the aperture of the swingably fitting member, a retaining portion integrated to or combined with the bolt and located in the internal space of the base so as to prevent the bolt from completely departing from the through hole of the base; and a nut screwed to the bolt of the prop component so as to abut against the upper outer edge of the swingably fitting member.

The fitting between the spherical convex and the spherical concave allows stepless adjustment of swing, and the spheral fitting provides sufficient supporting strength.

Preferably, there is further a bottom pad assembled to the disk of the base. The base has a first positioning portion, and the bottom pad has a second positioning portion that is configured to be positioned by the first positioning portion of the base.

According to the invention, the prop component is axially hollowed as a tube and the retaining portion is flared.

Preferably, the spherical concave of the swingably fitting member has an included angle from a center line thereof that is of between 60 degrees and 80 degrees.

Preferably, an included angle difference between the spherical convex of the base and the spherical concave of the swingably fitting member is of between 5 degrees and 30 degrees.

### BRIEF DESCRIPTION OF THE SEVERAL VIEWS OF THE DRAWINGS

FIG. 1 is a perspective view of a supporting foot assembly according to one preferred embodiment not in the scope of the claims.
FIG. 2 is an exploded view of the supporting foot assembly according to one preferred embodiment not in the scope of the claims.
FIG. 3 is a cross-sectional view of the supporting foot assembly according to one preferred embodiment not in the scope of the claims.
FIG. 4 is an exploded, cross-sectional view of the base and the swingably fitting member in the preferred embodiment not in the scope of the claims.
FIG. 5 is an assembled, cross-sectional view of the base and the swingably fitting member in the preferred embodiment not in the scope of the claims.
FIG. 6, like FIG. 3, shows the supporting foot assembly swung and posed to support an object not shown.
FIG. 7 is a perspective view of a supporting foot assembly of the second embodiment not in the scope of the claims.
FIG. 8 is an exploded view of the supporting foot assembly of the second preferred embodiment not in the scope of the claims.
FIG. 9 is a cross-sectional view of the supporting foot assembly of the second preferred embodiment not in the scope of the claims.
FIG. 10 is an exploded, cross-sectional view of the base and the swingably fitting member in the second preferred embodiment not in the scope of the claims.
FIG. 11 is a perspective view of a supporting foot assembly of the third preferred embodiment which is in the scope of the claims.
FIG. 12 is an exploded view of the supporting foot assembly of the third preferred embodiment which is in the scope of the claims.
FIG. 13 is a cross-sectional view the supporting foot assembly of the third preferred embodiment which is in the scope of the claims.
FIG. 14 is a cross-sectional view of a supporting foot assembly according to yet another preferred embodiment not in the scope of the claims.
FIG. 15 through FIG. 17 are an exploded view and cross-sectional views illustrating how the base and the bottom pad of the disclosed supporting foot assembly are assembled in one preferred aspect of the present invention.
FIG. 18 through FIG. 20 are an exploded view and cross-sectional views illustrating how the base and the bottom pad of the disclosed supporting foot assembly are assembled in another preferred aspect of the present invention.
FIG. 21 through FIG. 23 are an exploded view and cross-sectional views illustrating how the base and the bottom pad of the disclosed supporting foot assembly are assembled in still another preferred aspect of the present invention.

### DETAILED DESCRIPTION OF THE INVENTION

The invention as well as a preferred mode of use, further objectives and advantages thereof will be best understood by reference to the following detailed description of illustrative embodiments when read in conjunction with the accompanying drawings.

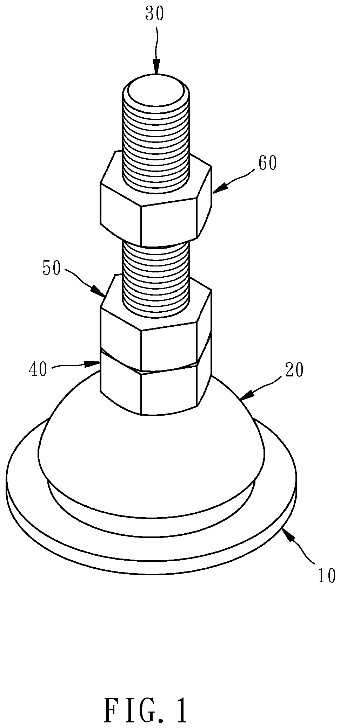

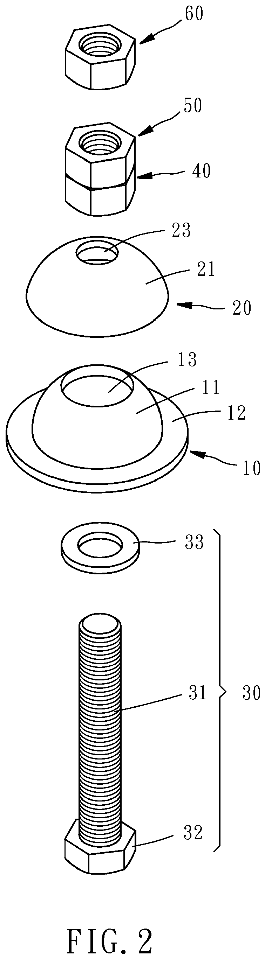

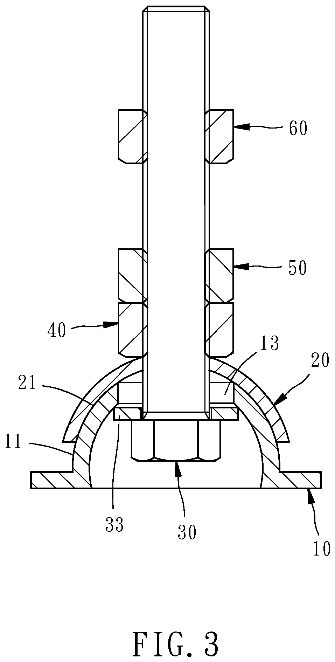

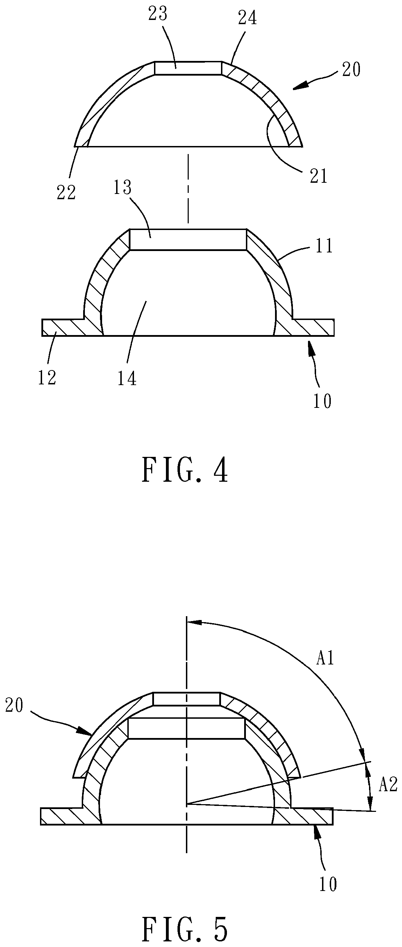

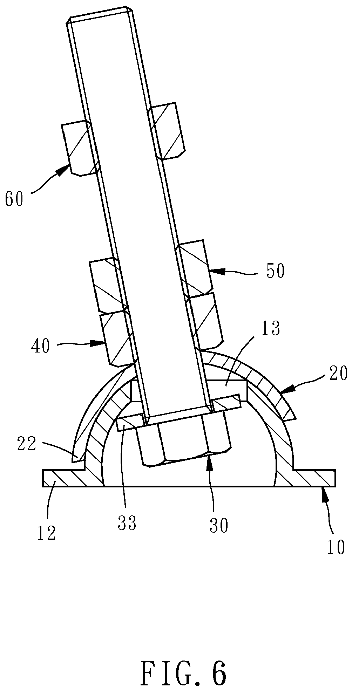

As shown in FIG. 1 through FIG. 6, there is provided a supporting foot assembly comprising a base (10), a swingably fitting member (20), a prop component (30), and a nut (40).

The base (10) has a spherical convex (11), a disk (12) connected to the spherical convex (11) from below, a through hole (13), and an internal space (14).

The swingably fitting member (20) has a spherical concave (21) swingably and fittingly contacting the spherical convex (11) of the base (10), a lower edge (22) located at the lower periphery of the spherical concave (21), an aperture (23), and an upper outer edge (24).

The prop component (30) has a bolt (31) passing through the through hole (13) of the base (10) and the aperture (23) of the swingably fitting member (20), a head (32) connected to the bolt (31), and a retaining portion (33) integrated to or combined with the bolt (31) and located in the internal space (14) of the base (10) to prevent the bolt (31) form leaving the through hole (13) of the base (10).

The nut (40) screwed to the bolt (31) of the prop component (30) so as to abut against the upper outer edge (24) of the swingably fitting member (20).

Therein, the spherical concave (21) of the swingably fitting member (20) has an included angle (A1) from the center line thereof that is of between 60 degrees and 80 degrees. For example, the included angle (A1) is of between 60 degrees and 65 degrees, or between 65 degrees and 70 degrees, or between 70 degrees and 75 degrees, or between 75 degrees and 80 degrees.

Therein, an included angle difference (A2) between the spherical convex (11) of the base (10) and the spherical concave (21) of the swingably fitting member (20) is of between 5 degrees and 30 degrees. For example, the included angle difference (A2) is of between 5 degrees and 10 degrees, or between 10 degrees and 15 degrees, or between 15 degrees and 20 degrees, or between 20 degrees and 25 degrees, or between 25 degrees and 30 degrees.

The fitting between the spherical convex (11) and the spherical concave (21) allows stepless adjustment of swing, and the spheral fitting provides sufficient supporting strength.

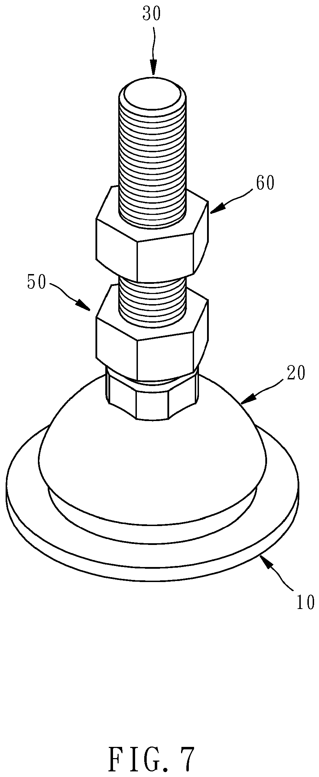

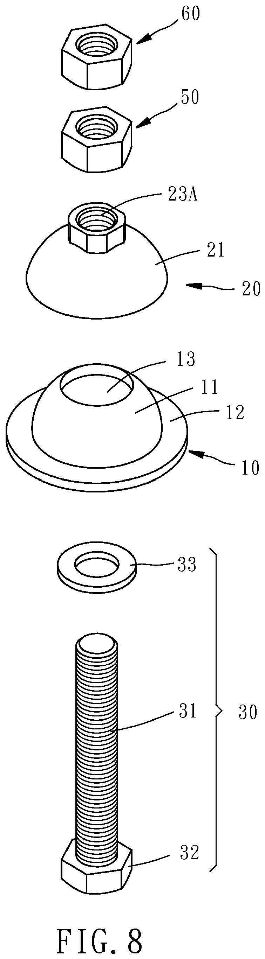

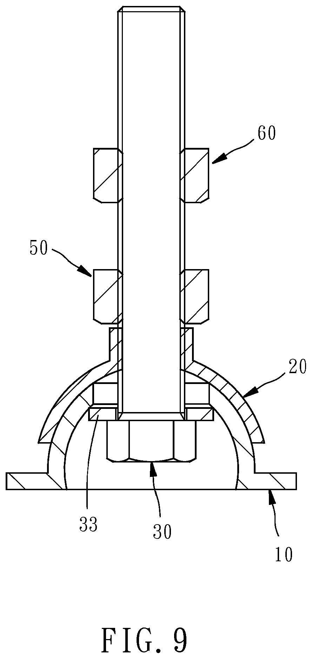

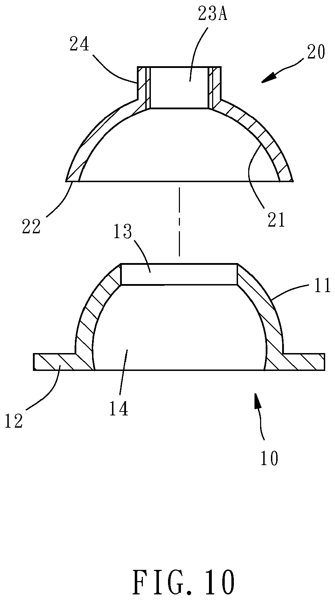

As shown in FIG. 7 through FIG. 10, there is provided another supporting foot assembly comprising a base (10), a swingably fitting member (20), and a prop component (30).

The base (10) has a spherical convex (11), a disk (12) connected to the spherical convex (11) from below, a through hole (13), and an internal space (14).

The swingably fitting member (20) has a spherical concave (21) swingably fit the spherical convex (11) of the base (10), a threaded hole (23A), and a lower edge (22) located at the lower periphery of the spherical concave (21), and an upper outer edge (24). The upper outer edge (24) is made by integrating the nut (40) with the swingably fitting member (20), and preferably has a top thereof formed as a plane for stable screwing combination.

The prop component (30) has a bolt (31) that passes through the through hole (13) of the base (10) and is screwed to the threaded hole (23A) of the swingably fitting member (20), a head (32) connected to the bolt (31), a retaining portion (33) integrated to or combined with the bolt (31) and located in the internal space (14) of the base (10) so as to prevent the bolt (31) completely departing from the through hole (13) of the base (10).

Therein, the spherical concave (21) of the swingably fitting member (20) has an included angle form the center thereof that is of between 60 degrees and 80 degrees. (A smaller interval is additionally defined so as to achieve the optimal state of 150 degrees). For example, 60 degrees and 65 degrees, 65 degrees and 70 degrees, 70 degrees and 75 degrees, 75 degrees and 80 degrees.

Therein, an included angle difference (A2) between the spherical convex (11) of the base (10) and the spherical concave (21) of the swingably fitting member (20) is of between 5 degrees and 30 degrees. For example, the included angle difference (A2) is of between 5 degrees and 10 degrees, or between 10 degrees and 15 degrees, or between 15 degrees and 20 degrees, or between 20 degrees and 25 degrees, or between 25 degrees and 30 degrees.

The fitting between the spherical convex (11) and the spherical concave (21) allows stepless adjustment of swing, and the spheral fitting provides sufficient supporting strength.

The difference is that the swingably fitting member (20) is combined with the prop component (30) more stably.

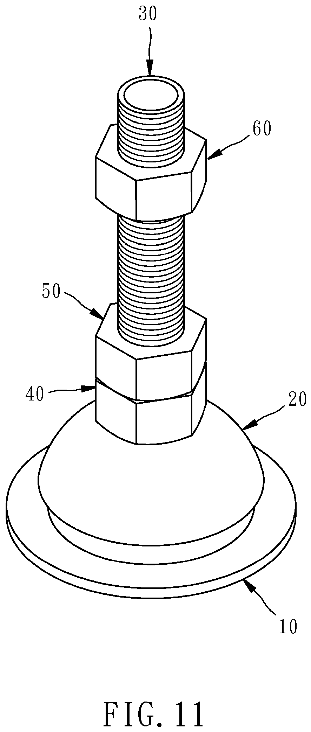

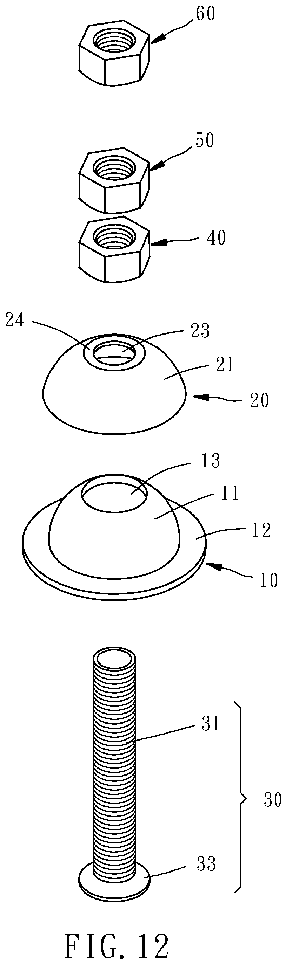

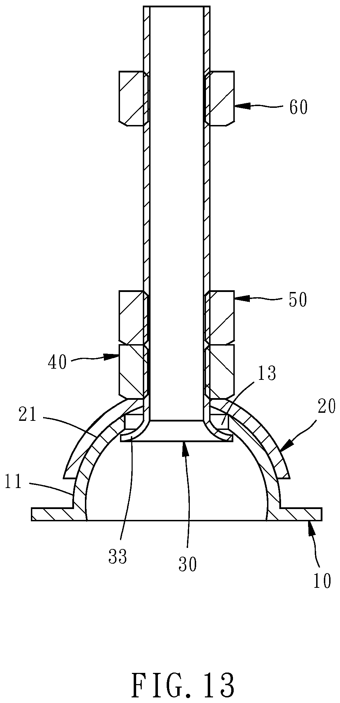

As shown in FIG. 11 through FIG. 13, the present invention provides still another supporting foot assembly that is similar to the aforementioned embodiments but has the following features.

The prop component (30) is axially hollowed as a tube. The retaining portion (33) is flared. The upper outer edge (24) preferably has a top thereof formed as a plane for stable screwing combination. Thereby, the prop component (30) can be made light-weighted and formation of the retaining portion (33) is easier.

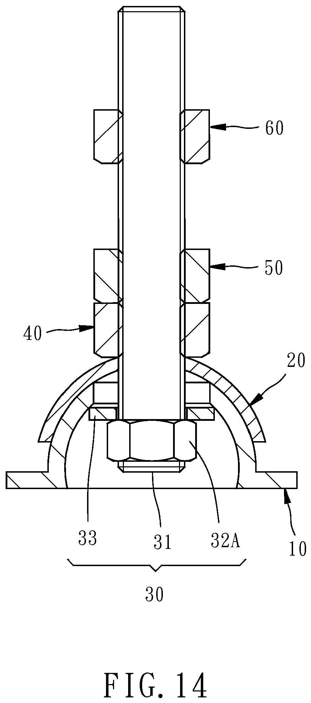

As shown in FIG. 14, there is provided another supporting foot assembly that is similar to the aforementioned embodiments but has the following features.

The prop component (30) has atop a removably screwed nut (32A) instead of the integratedly formed head (32). The benefit is that the prop component (30) can be assembled from top to bottom, allowing an alternative, convenient assembling process.

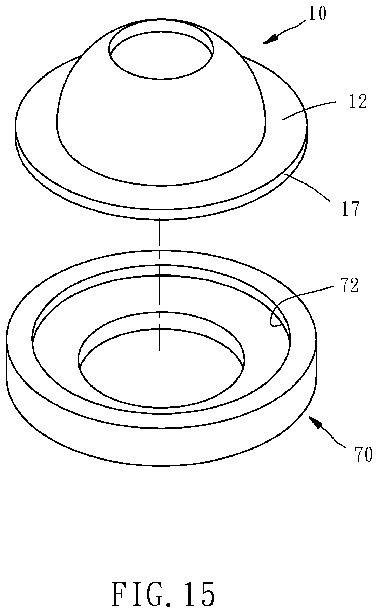

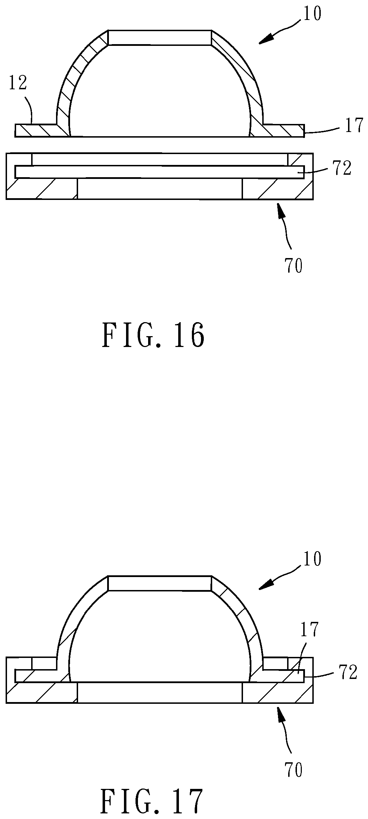

As shown in FIG. 15 through FIG. 17 there is provided another supporting foot assembly that further comprises a bottom pad (70) that is assembled to the disk (12) of the base (10). The base (10) has a first positioning portion (17), and the bottom pad (70) has a second positioning portion (72) that is configured to be positioned by the first positioning portion (17) of the base (10).

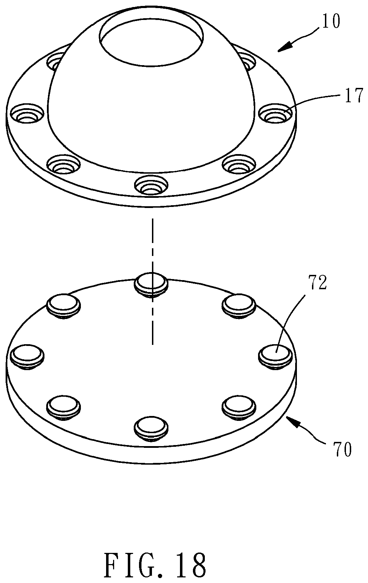

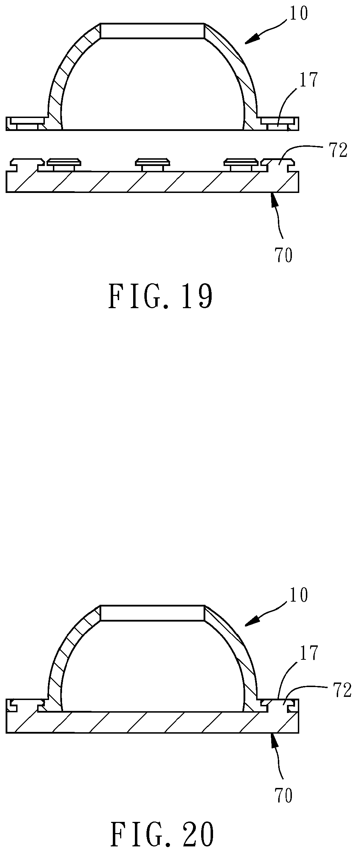

As shown in FIG. 18 through FIG. 20, there is provided still another supporting foot assembly that further comprises a bottom pad (70) that is assembled to the disk (12) of the base (10). The base (10) has a first positioning portion (17), and the bottom pad (70) has a second positioning portion (72) that is configured to be positioned by the first positioning portion (17) of the base (10).

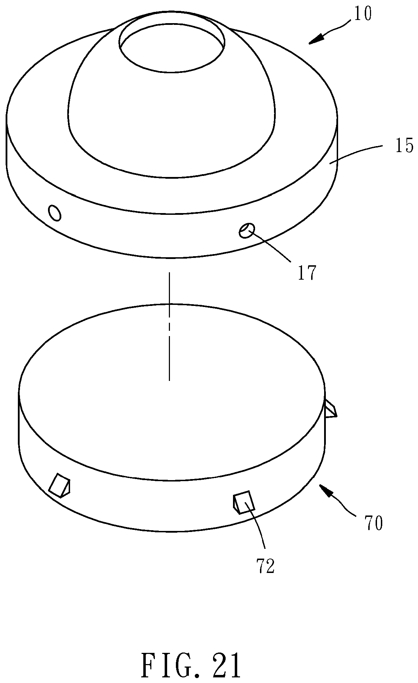

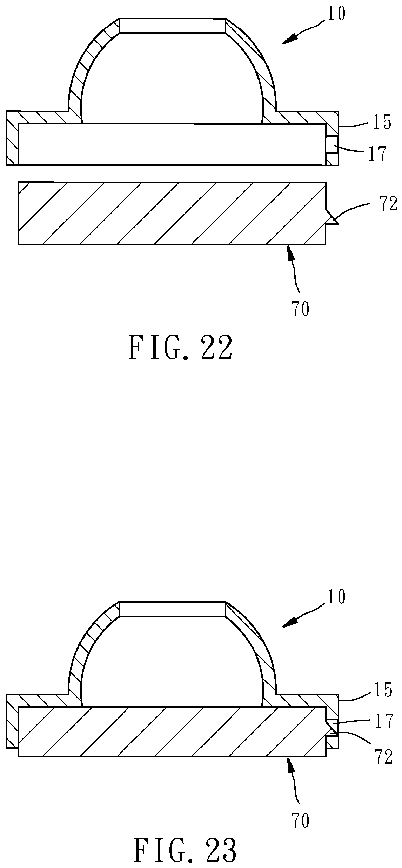

As shown in FIG. 21 through FIG. 23, there is provided yet another supporting foot assembly that further comprises a bottom pad (70) that is assembled to the disk (12) of the base (10). A peripheral wall (15) is formed around and downward from the disk (12) of the base (10). The base (10) has a first positioning portion (17), and the bottom pad (70) has a second positioning portion (72) that is configured to be positioned by the first positioning portion (17) of the base (10).

Alternative to the previous embodiments, the base (10) may have its spherical convex (11) greater than a hemisphere or equal to a hemisphere.

To sum up, in virtue of the fitting between the spherical convex (11) and the spherical concave (21), the disclosed supporting foot assembly does allow stepless adjustment of swing, and the spheral fitting provides sufficient supporting strength, thereby achieving the objective of the present invention.

## Claims

1. A supporting foot assembly, comprising:
a base (10), having a spherical convex (11), a disk (12) connected to the spherical convex (11) from below, a through hole (13), and an internal space (14);
a swingably fitting member (20), having a spherical concave (21) swingably and fittingly contacting the spherical convex (11) of the base (10), a lower edge (22) located at a lower periphery of the spherical concave (21), an aperture (23), and an upper outer edge (24);
further comprising:
a prop component (30), having a bolt (31) passing through the through hole (13) of the base (10) and the aperture (23) of the swingably fitting member (20), and a retaining portion (33) integrated to or combined with the bolt (31) and located in the internal space (14) of the base (10) so as to prevent the bolt (31) completely departing from the through hole (13) of the base (10); **characterized in that**
the prop component (30) is axially hollowed as a tube and the retaining portion (33) is flared; and
a nut (40), being screwed to the bolt (31) of the prop component (30) so as to abut against the upper outer edge (24) of the swingably fitting member (20).

2. The supporting foot assembly of claim 1, further comprising a bottom pad (70) assembled to the disk (12) of the base (10); the base (10) having a first positioning portion (17), and the bottom pad (70) having a second positioning portion (72) that is configured to be positioned by the second positioning portion (17) of the base (10).

3. The supporting foot assembly of claim 1, wherein the spherical concave (21) of the swingably fitting member (20) has an included angle (A1) from a center line thereof that is of between 60 degrees and 80 degrees.

4. The supporting foot assembly of claim 1, wherein an included angle difference (A2) between the spherical convex (11) of the base (10) and the spherical concave (21) of the swingably fitting member (20) is of between 5 degrees and 30 degrees.

## Patentansprüche

1. Stützfußanordnung, welche umfasst:
eine Basis (10) mit einer sphärischen Konvexität (11), einer von unten mit der sphärischen Konvexität (11) verbundenen Scheibe (12), einem Durchgangsloch (13) und einem Innenraum (14);
ein schwenkbares Anpassungselement (20) mit einer kugelförmigen Konkavität (21), die schwenkbar und passend die kugelförmige Konvexität (11) der Basis (10) berührt, einer Unterkante (22), die an einem unteren Umfang der kugelförmigen Konkavität (21) angeordnet ist, einer Öffnung (23) und einer oberen Außenkante (24);
worin die Stützfußanordnung ferner umfasst:
eine Stützenkomponente (30) mit einem Bolzen (31), der durch das Durchgangsloch (13) der Basis (10) und die Öffnung (23) des schwenkbaren Anpassungselements (20) hindurchgeht, und einen Halteabschnitt (33), der mit dem Bolzen (31) einstückig verbunden oder kombiniert ist und in dem Innenraum (14) der Basis (10) angeordnet ist, um zu verhindern, dass der Bolzen (31) vollständig aus dem Durchgangsloch (13) der Basis (10) austritt;
**dadurch gekennzeichnet, dass** die Stützenkomponente (30) axial rohrförmig ausgehöhlt ist und der Halteabschnitt (33) aufgeweitet ist; und
eine Mutter (40), die so auf den Bolzen (31) der Stützenkomponente (30) aufgeschraubt ist, dass sie an der oberen Außenkante (24) des schwenkbaren Anpassungselement (20) anliegt.

2. Stützfußanordnung nach Anspruch 1, welche ferner ein Bodenpolster (70) umfasst, das an der Scheibe (12) der Basis (10) angebracht ist; worin die Basis (10) einen ersten Anordnungsabschnitt (17) aufweist und das Bodenpolster (70) einen zweiten Anordnungsabschnitt (72) aufweist, der ausgestaltet ist, durch den zweiten Anordnungsabschnitt (17) der Basis (10) angeordnet zu werden.

3. Stützfußanordnung nach Anspruch 1, worin die kugelförmige Konkavität (21) des schwenkbaren Anpassungselements (20) einen eingeschlossenen Winkel (A1) von einer Mittellinie desselben aufweist, der zwischen 60 Grad und 80 Grad liegt.

4. Stützfußanordnung nach Anspruch 1, worin ein eingeschlossener Winkelunterschied (A2) zwischen der sphärischen Konvexität (11) der Basis (10) und der sphärischen Konkavität (21) des schwenkbaren Anpassungselements (20) zwischen 5 Grad und 30 Grad beträgt.

## Revendications

1. Ensemble de pied de support, comprenant:
une base (10), ayant un convexe sphérique (11), un disque (12) relié au convexe sphérique (11) par le dessous, un trou traversant (13), et un espace interne (14);
un élément s'adaptant de manière oscillante (20), ayant une concavité sphérique (21) en contact de manière oscillante et ajustée avec le convexe sphérique (11) de la base (10), un bord inférieur (22) situé au niveau d'une périphérie inférieure de la concavité sphérique (21), une ouverture (23), et un bord extérieur supérieur (24);
comprenant en outre:
un composant d'étai (30), ayant un boulon (31) passant à travers le trou traversant (13) de la base (10) et l'ouverture (23) de l'élément s'adaptant de manière oscillante (20), et une partie de retenue (33) intégrée à ou combinée avec le boulon (31) et située dans l'espace interne (14) de la base (10) de manière à empêcher le boulon (31) de sortir complètement du trou traversant (13) de la base (10);
**caractérisé en ce que** le composant d'étai (30) est creusé axialement comme un tube et la partie de retenue (33) est évasée; et
un écrou (40), qui est vissé au boulon (31) du composant d'étai (30) de manière à venir en butée contre le bord extérieur supérieur (24) de l'élément s'adaptant de manière oscillante (20).

2. Ensemble de pied de support de la revendication 1, comprenant en outre un tampon inférieur (70) assemblé au disque (12) de la base (10); la base (10) ayant une première partie de positionnement (17), et le tampon inférieur (70) ayant une seconde partie de positionnement (72) qui est configurée pour être positionnée par la seconde partie de positionnement (17) de la base (10).

3. Ensemble de pied de support de la revendication 1, dans lequel la concavité sphérique (21) de l'élément s'adaptant de manière oscillante (20) a un angle inclus (A1) à partir d'une ligne centrale de celui-ci qui est compris entre 60 degrés et 80 degrés.

4. Ensemble de pied de support de la revendication 1, dans lequel une différence d'angle inclus (A2) entre le convexe sphérique (11) de la base (10) et le concavité sphérique (21) de l'élément s'adaptant de manière oscillante (20) est comprise entre 5 degrés et 30 degrés.
